Europäisches Patentamt

**European Patent Office**

Office européen des brevets

(19)

(11) Publication number: **0 007 741**

**A1**

(12) **EUROPEAN PATENT APPLICATION**

(21) Application number: **79301354.1**

(22) Date of filing: **10.07.79**

(51) Int. Cl.³: **G 01 M 1/28**

(30) Priority: **15.07.78 GB 3001278**

(43) Date of publication of application:
**06.02.80 Bulletin 80/3**

(84) Designated Contracting States:
**BE CH DE FR GB IT LU NL SE**

(71) Applicant: **GKN Transmissions Limited**
**P.O. Box 405 Chester Road**
**Erdington, Birmingham B24 0RB(GB)**

(72) Inventor: **Forster, Brian Michael**
**11, Casson Drive Harthill**
**Sheffield, S31 8WA(GB)**

(72) Inventor: **Scholfield, Ian MacDonald**
**124, Longedge Lane Wingerworth**
**Chesterfield, S42 6PP(GB)**

(74) Representative: **Robertson, Bernard Collett et al,**
**Guest Keen & Nettlefolds Limited Patents and Licensing**
**Department Group Head Office P.O. Box 55**
**Smethwick Warley, West Midlands B66 2RZ(GB)**

(54) A method and device for balancing a vehicle wheel.

(57) An electronic wheel balancer intended primarily but not exclusively for front wheels of front wheel drive cars is such that it can be used by a single operator, who operates the engine from the driving seat to drive the wheels and also observes the criteria for balancing the wheels. The front wheels (12) are supported off the ground by supports (15) engaged with the suspension and incorporating force transducers (16). The wheels are provided with marks (21) at a datum rotational position and transducers (19) to indicate when the wheels are in these positions. The phase relationship between the output of each force transducer (16) and the datum position signal is derived electronically and displayed to indicate the angular position for application of balancing weights on the wheel. The value of the required balancing weight is derived from the output of the force transducers. Position and weight signals are displayed on a portable display unit (23).

FIG.1

78.52/ABC                    Wheel Balancers

The invention relates to wheel balancers for balancing wheels mounted in position on a vehicle.

Conventional on-the-vehicle wheel balancers use a spinner to rotate a wheel to be balanced up to a suitable speed which may be 110 to 130 kph while the wheel to be balanced is raised off the ground on a support incorporating a force transducer. The most important wheels to be balanced are the front wheels. If the front wheels are not driven from the vehicle engine there is no difficulty in rotating one front wheel at the desired speed. However if the front wheels are driven through a conventional differential, it is detrimental to the differential to rotate one wheel at the appropriate speed while the other wheel is held stationary on the ground.

One way in which this problem has been overcome is to raise both front wheels from the ground simultaneously and to use the engine of the vehicle to drive the wheels at a suitable speed. The required value of a balancing weight is derived from the maximum value of a cyclically varying load signal from the force transducer which represents the out of balance force of the rotating wheel and the position of the required weight around the periphery of the wheel is indicated by a stroboscope triggered by a reference point in the cyclically variable load signal. A problem associated with this procedure is that it requires two operators, one to operate the controls of the vehicle and the other to observe the position of the wheel indicated by the stroboscope, normally by noting the rotational position at which the conventional tyre valve is illuminated. Not only does this require one more operator than the conventional single wheel balancing operation using a spinner, but the two operators have to co-ordinate their activities in the noisy environment associated with the running engine.

It has been proposed in U.K. Patent Specification No.1,129,477 to use a photo-detector and a patch on the wheel to sense a datum rotational portion of a wheel being balanced and to derive the required position for a weight from the phase relationship between an out of balance signal and a datum signal from the photo-detector. However, this known system does not operate at a pre-determined wheel speed with the result that there is no clear relationship between the amplitude of the out of balance signal and the required weight from which it follows that several different weights have to be used on a trial and error basis. This complicates the operation of the system. Also, the controls are not made available to an operator at the controls of the vehicle, so one operator is required for the vehicle controls and another for the wheel balancer controls.

An object of the present invention is to provide an on-the-vehicle wheel balancer which can be used for the engine driven wheels of a vehicle and which can be operated by a single operator. However the use of the wheel balancer of the invention is not restricted to use with engine driven wheels or with two wheels which are being rotated simultaneously.

According to the present invention there is provided a wheel balancer for balancing a wheel mounted in position on a vehicle and of the kind comprising:

a support for engagement with the vehicle adjacent to a wheel and for supporting part of the vehicle with the wheel off the ground,

a force transducer arranged to sense cyclic variations in the load on the support associated with out of balance forces during rotation of the wheel and thereby produce a cyclically varying load signal,

means for deriving a weight signal proportional to the maximum value of the load signal,

means for displaying the weight signal to indicate the value of a balance weight needed to balance the wheel,

and manual controls for the wheel balancer, characterised by the provision of a position transducer arranged to provide a datum position signal when the wheel is rotating and passes a datum rotational position, means for deriving the phase relationship between the weight signal and the datum position signal to provide an angle signal indicative of the position of the out of balance force in relation to the datum position, and a portable control and display unit capable of being positioned where it is visible to and operable by an operator sitting in the driving seat of the vehicle for controlling the wheel balancer and displaying weight and angle signals indicative of the requirements for balancing the wheel.

The displays can be made available to an operator who is sitting in the driving seat of the vehicle so that even when front wheels of a front wheel drive car are being rotated by the vehicle engine during the balancing operation, only a single operator is needed.

Preferably the means for deriving the phase relationship comprises means for generating a series of counting pulses from the load signal, the counting pulses sub-dividing each cycle of the load signal into intervals representative of angles of wheel rotation, means for generating a starting pulse at a specific phase position of the load signal and means for counting the number of counting pulses between the start pulse and the datum position to provide an indication of said phase relationship.

Preferably the counting pulses are derived by detecting when the load signal itself and other functions derived from the load signal pass through zero. When the load signal is defined as f, a function of time t, the derived signals may be $\frac{df}{dt}$ ; $f + \frac{df}{dt}$ and $f - \frac{df}{dt}$.

When the counting pulses are required at a particular nominal wheel speed further counting pulses may be derived by a specific delay from each of the previously derived pulses equivalent to half the nominal time between these previously derived pulses based on the nominal wheel speed.

Preferably the position transducer is constituted by a reflective mark applied to the wheel and a light source and photo-detector arranged so that the photo-detector responds to the passage of the mark past the detector during rotation of the wheel and thereby derives the datum position signal.

Preferably the wheel balancer comprises a portable control unit incorporating the means for displaying the weight and angle signals.

The invention also extends to a method of operating a wheel balancer as described above and in particular the invention provides a method of balancing a pair of driven wheels of a vehicle including the steps of

raising said wheels off the ground on supports arranged adjacent to the wheels and incorporating force transducers arranged to sense cyclic variations in the loads on the supports and thereby produce cyclically variable load signals during rotation of the wheels,

applying a mark to each of said wheels and arranging a detector in relation to each wheel to respond to the passage of the mark past the detector during rotation of the wheel and thereby produce a datum position signal,

rotating the wheels at a pre-selected speed from the engine of the vehicle,

deriving a weight signal proportional to the maximum value of each load signal,

deriving the phase relationship between each weight signal and its associated datum position signal to provide an angle signal indicative of the position of the out of balance force in relation to the datum position,

displaying weight and angle signals indicative of requirements for balancing the wheels,

bringing the wheels to rest,

BAD ORIGINAL

and applying the balance weights of the indicated value to the wheels at the indicated angles with respect to the datum position.

An embodiment of the invention will now be described by way of example with reference to the accompanying drawings in which:

Figure 1 is a diagrammatic representation of a wheel balancer of the invention in use with a vehicle;

Figure 2 is a block diagram of the electrical circuit of the wheel balancer and

Figure 3 is a diagram indicating several wave forms of Figure 2.

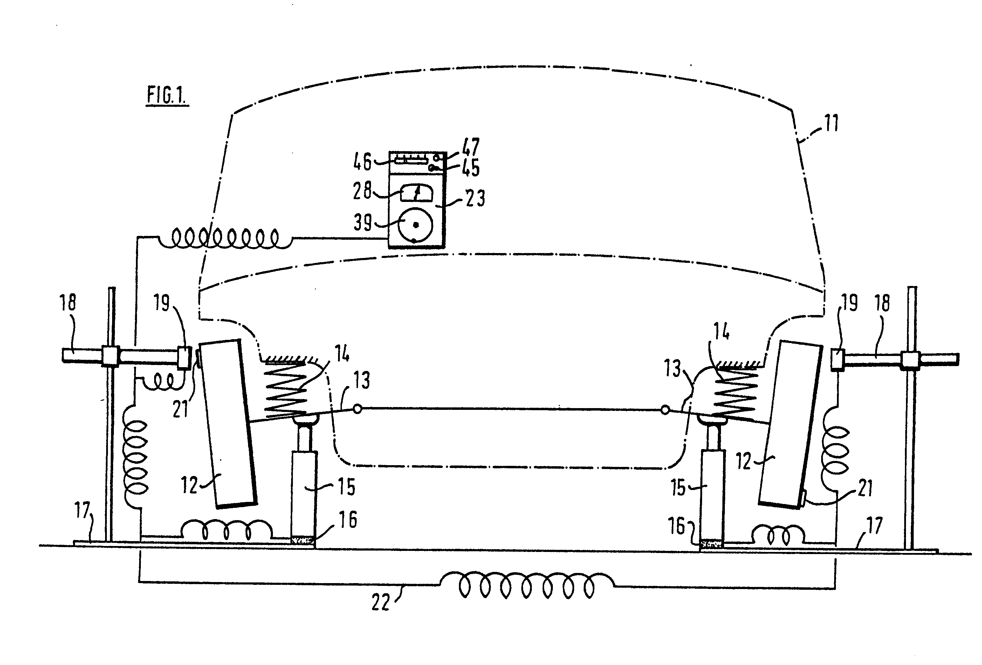

In Figure 1 the outline of a car 11 is shown in chain dotted lines and some parts of the car which are relevant for the purposes of the invention are shown in greater detail. The car incorporates two front wheels 12 connected to the vehicle chassis or body by suspension linkages 13. Springs 14 normally support the weight of the vehicle with respect to the suspension arms 13.

In the position shown the front of the vehicle is supported off the ground by two supports 15 which engage parts of the vehicle suspension so that the suspension is generally in the normally loaded configuration. The supports should be moveable laterally to accommodate lateral components of suspension movement as the vehicle settles on the supports. Each support incorporates a piezo electric crystal force transducer 16 responsive to the vertical load of the vehicle on the support. Each support 15 is connected to a stand 17 which carries on a vertically adjustable arm 18 the fixed parts of a position transducer 19 constituted by a light source and a photo-detector. The light source is arranged to illuminate a part of the wheel near its periphery

and the photo-detector is arranged to receive light from this part of the wheel. Each wheel 12 carries a lightweight patch 21 which forms part of the position transducer. The transducer is such that the photo-detector responds to the presence of the patch 21 in the field of the light source and photo-detector and thereby produces a datum position signal indicative of the rotational position of the wheel.

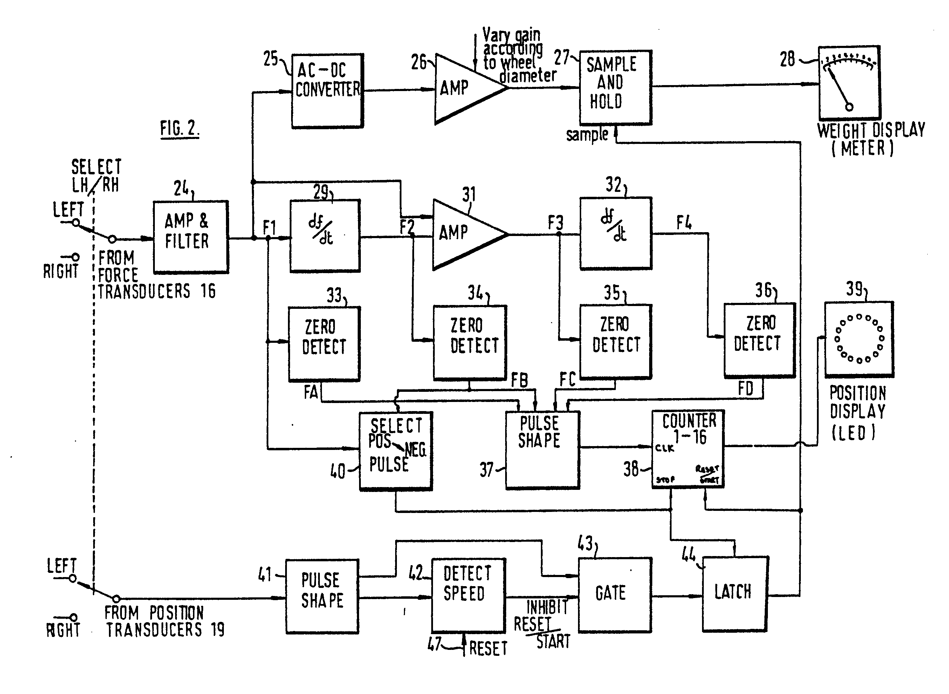

Signal transmitting connections and any necessary power connections to the transducers are made by way of flexible cable 22 connected to a portable control and display unit 23. The control and display unit 23 may conveniently house all of the data processing logic described with reference to Figure 2.

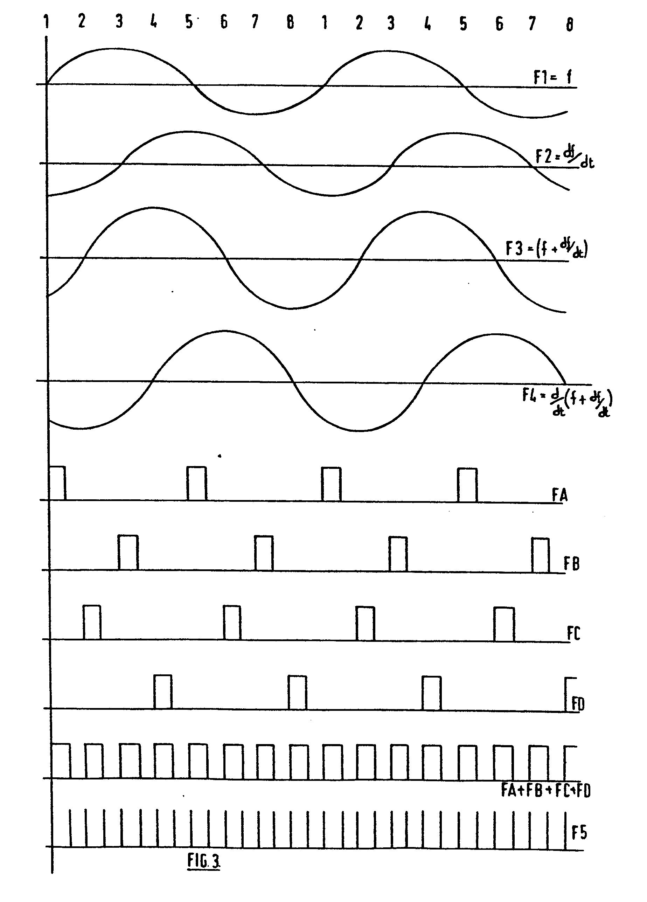

Once the vehicle has been set up as described above an operator can sit in the driving seat of the vehicle and operate the controls of the car and at the same time can operate and observe the control and display unit. The data collected by the transducers is processed in the control unit in a way which will be described with reference to Figures 2 and 3 and the control unit then displays weight and angle signals indicative of the requirements for balancing the wheels.

The electrical circuitry will now be described with reference to Figures 2 and 3. Figure 2 shows a circuit suitable for processing the information associated with a single wheel. In practice this circuit may be duplicated or operated on an automatically controlled time division multiplex basis or, as shown, may be switched manually from the control and display unit by switch 45 between left and right hand wheels to process the information for each wheel individually.

In order to produce the required signals the vehicle wheels are rotated by the engine to a speed equivalent to a road speed of 130 kph. The wheel speed is then allowed to

reduce slowly through 112½ kph (70mph) or a similar selected speed and it is at this speed that the system becomes fully operative as will be described subsequently.

The cyclically varying load signal generated in the left hand force transducer is fed through an amplification and filter stage 24 to reduce noise and provide a suitable amplitude for further processing. The load signal is then fed through an AC-DC converter 25 to a variable gain amplifier 26. The output from amplifier 26 is then fed to a sample and hold unit 27, the control of which will be described subsequently. At the stage when it is held in the sample and hold unit 27, the output from amplifier 26 is fed to a weight display 28 constituted by a suitably calibrated meter arranged in the control and display unit 23. The AC-DC converter 25 effectively detects the peak value of the load signal. This is then adjusted by the variable gain of amplifier 26 to compensate for different wheel diameters and possibly for other factors associated with the geometry of the vehicle suspension to result in a weight signal. The amplifier gain controls are mounted in the control and display unit 23 and include a slide 46 calibrated in terms of wheel diameter. In this way the quantity displayed in the weight display 28 is representative of the weight in grams of the balance weight required to correct the balance of the wheel.

The amplified and filtered load signal, designated F1 and shown in Figure 2 is also fed to a differentiating unit 29 to produce waveform F2. F1 and F2 are both sinusoidal waveforms with F2 being phase shifted through 90 degrees with respect to F1. Waveforms F1 and F2 are also added in an amplifier 31 to provide waveform F3. This is a sinusoidal waveform phase shifted by 45 degrees from F1. Waveform F2 is subtracted from F1 in an amplifier 32 to produce waveform F4 which is phase shifted by 135 degrees from F1.

8

If the waveform F1 is represented by function f then; F1 = f; F2 = $\frac{df}{dt}$; F3 = f + $\frac{df}{dt}$ and F4 = f - $\frac{df}{dt}$.

Functions F1, F2, F3 and F4 are each fed to a respective zero detector 33, 34, 35 or 36 and the output from each zero detector is a train of pulses shown in Figure 3 as FA, FB, FC and FD respectively. The pulse width of each of these pulses is set by means such as an R-C circuit in the zero detector to be 1/16 of the cycle time of the load signal when the vehicle wheel is rotating at a speed equivalent to 112½ kph which is the nominal speed at which the wheel balancer is intended to operate. These functions FA to FD are then supplied to a pulse shaping unit 37 which produces at its output a pulse of short duration at the beginning and the end of each pulse of functions FA to FD. This is function F5 which is also shown in Figure 3. F5 is then a series of counting pulses derived from the load signal, the counting pulses sub-dividing each cycle of the load signal into sixteen intervals representative of 22½ degree angles of wheel rotation. These counting pulses are fed to a clock pulse input of counter 38, which is capable of counting up to sixteen. The operation of the counter and its control of a position display 39 will be described subsequently.

Function F2 is 90 degrees out of phase with function F1 with the result that a pulse occurs in function FB when the instantaneous value of function F1 (the load signal) is at a maximum. Function FB is fed to a selection device 40 which is controlled in addition by function F1 so that it passes an output pulse only when function F1 is positive. In this way the output from the selection device 40 is a single pulse for each cycle of the load signal coincident with the maximum positive value of the load signal. This pulse represents a position signal indicating the angular position on the wheel of the out of balance force and is used as will be subsequently described in the control of counter 38.

The datum position signal derived from the position transducer for the left hand wheel is fed to a pulse shaping circuit 41 to convert the signal to a series of pulses each of uniform duration and amplitude. This datum position signal is thus constituted by a single uniform pulse for each revolution of the wheel. These pulses are fed to a speed detection circuit 42 which is arranged to produce an output signal when the speed indicated by the train of pulses is equivalent to the nominal operating speed of the balancer, in this example effectively convert its input pulses to an average DC level and produce an output signal only when this average DC level corresponds to the appropriate speed. The speed detection circuit is such that as the speed increases through the selected speed an output signal occurs at an up output and when the speed decreases through the selected speed a corresponding signal occurs at the down output. The up output signal is applied to a pre-set input of a latch 44 which produces an output to enable one input of a NAND gate 43.

When the wheel speed subsequently passes down through the selected speed, the down output signal enables a second input of NAND gate 43 so that this gate can pass the next shaped position pulse from the circuit 41 to a start input of counter 38.

The counter runs during part of a cycle in response to the train of counting pulses represented by function F5 until the position signal pulse is produced at the output of selection device 40 from which it is applied to the stop control of counter 38. The counter is in this way set to a count of pulses of the function F5 corresponding to the proportion of a wheel revolution between the occurrence of a datum position pulse and the maximum value of the weight signal. It is thus a measure of the phase relationship between the weight signal and the datum position signal which in turn is representative of the angle between the datum position and the out of balance force. This count is displayed on a position display 39 arranged in the control and display unit 23. The display is constituted by a ring of sixteen light emitting diodes which are arranged in such a configuration as to represent angles of wheel rotation. This display thus represents an illustration of the angle at which a weight should be applied to the wheel when the patch 21 is in a datum position to correct any out of balance.

The output signal from the latch 44 which is produced when the wheel speed goes up through the selected speed is also arranged to set the sample and hold device 27 to sample. The down output from speed detection circuit 42 also enables a gate 43 so that the next position signal pulse from selection device 40 is applied to the set input of latch 44. This causes the output from the latch to set the sample and hold circuit 27 to hold so that the weight signal at the selected speed is held and displayed continuously at the weight display 28. The output from the latch also disables gate 43 so that no further start signal can be applied to the counter 38.

In this way the weight and position requirements are displayed simultaneously and are held on the displays until the circuit is reset by a reset control 47 on the control and display unit 23. The wheel is brought to rest, for example by use of the vehicle brakes. At this stage, the operator has all the information needed to balance one wheel. Then, whilst still at the controls of the vehicle he can make a record of this information, reset the diaplays, switch over to the other wheel and repeat the operation. The operator then leaves the vehicle in order to apply the necessary balance weights to the wheels.

One wheel is rotated by hand to a position where its patch 21 is opposite the position transducer 19 and a weight of value indicated on the weight display is added at the position indicated in the position display. This is repeated for the other wheel. These additional weights should balance the wheels to within acceptable limits but as is normal in most wheel balancers, it is desirable to check that a condition of balance has been achieved by repeating the balancing operation. It is customary to consider that an out of balance weight of less than 10 grams is sufficiently close to a balanced condition and to this end the lower part of the scale of the weight display may be a green coloured sector indicative of satisfactory balance.

An alternative would be to provide separate displays for right and left hand wheels and to either duplicate the circuitry or operate it on a time division multiplex basis so that necessary data for both wheels can be obtained in a single run.

Although the wheel balancer just described can be operated and is particularly suitable for operation with the front wheels of a front wheel drive car, the same balancer could be adapted for operation in other circumstances. For example it could be used as a single wheel balancer either when one or when both of the wheels of a pair are being rotated at the same time. If it is desired to balance wheels which are not connected to the vehicle engine, it would be possible to provide a conventional wheel spinner for engagement with the tyre of the wheel to rotate it up to the required speed. If a spinner is available, the wheel balancer is particularly versatile and can be used with any wheel of any vehicle whether driven or undriven from the engine of the vehicle.

Although the position transducer has been described as a photo-electric device other forms of position transducer could be used. For example the patch could be replaced by a patch of magnetic tape, the position of which would be detected by a magnetic detector. Other devices such as a proximity switch detecting the proximity of the tyre valve or other protusion may also be used.

A further possible modification of the invention would be to adapt the wheel balancer for using a plurality of weights of a single predetermined value at a variety of locations in place of using a single weight of value determined by the out of balance of the wheel. In further detail, it is known to use two weights of a predetermined value such as 30 grams at an angle to either side of the angular position at which a single weight would be required. These angles are selected such that the resultant balancing force of the two weights is equivalent to a weight of the required value at the central position between the two weights. A display of this type could be used with the present invention. In such a case the display takes the form of a plurality of angle signals and the weight signal is represented by a predetermined weight value to which the apparatus is set. Further details of such a system are described in our co-pending patent application No.21981/78.

The wheel balancer described above provides for what is known as static balance of a wheel in that it enables out of balance forces to be compensated by the addition of weights. In order to achieve dynamic balance it is also necessary to insure that any out of balance couples are balanced out and this is normally done by placing weights at diametrically opposite positions on the two rims of the wheel. In order to enable out of balance couples to be detected a further force transducer together with the appropriate processing and display equipment as already described for force balancing may be provided. The additional transducer should be arranged to detect an out of balance force in a horizontal direction at a position offset from the wheel axis and from this measurement an out of balance couple can be calculated in a conventional way. The processing equipment for the out of balance force and out of balance couple signals may be combined so that a common display is provided to indicate the combined requirements for balancing out the out of balance forces and couples.

CLAIMS

1. A wheel balancer for balancing a wheel mounted in position on a vehicle and of the kind comprising:

a support for engagement with the vehicle adjacent to a wheel and for supporting part of the vehicle with the wheel off the ground,

a force transducer arranged to sense cyclic variations in the load on the support associated with out of balance forces during rotation of the wheel and thereby produce a cyclically varying load signal,

means for deriving a weight signal proportional to the maximum value of the load signal,

means for displaying the weight signal to indicate the value of a balance weight needed to balance the wheel,

and manual controls for the wheel balancer

characterised by the provision of a position transducer arranged to provide a datum position signal when the wheel is rotating and passes a datum rotational position,

means for deriving the phase relationship between the weight signal and the datum position signal to provide an angle signal indicative of the position of the out of balance force in relation to the datum position,

and a portable control and display unit capable of being positioned where it is visible to and operable by an operator sitting in the driving seat of the vehicle for controlling the wheel balancer and displaying weight and angle signals indicative of the requirements for balancing the wheel.

2. A wheel balancer as claimed in Claim 1 for balancing a pair of wheels incorporating two such supports, force transducers and position transducers, one for each wheel, the supports, force transducers and position transducers being connected to a common control and display unit.

3. A wheel balancer as claimed in Claim 1 or Claim 2 wherein the means for deriving the phase relationship comprises means for generating a series of counting pulses from the load signal, the counting pulses sub-dividing each cycle of the load signal into intervals representative of angles of wheel rotation, means for generating a starting pulse at a specific phase position of the load signal and means for counting the number of counting pulses between the start pulse and the datum position to provide an indication of said phase relationship.

4. A wheel balancer as claimed in Claim 3 in which the counting pulses are derived by detecting when the load signal itself and other functions derived from the load signal pass through zero.

5. A wheel balancer as claimed in Claim 4 in which the load signal is defined as f and the derived signals are:
$\frac{df}{dt}$; $f + \frac{df}{dt}$ and $f - \frac{df}{dt}$.

6. A wheel balancer as claimed in Claim 5 in which counting pulses are always required at a particular nominal wheel speed and further counting pulses are derived by a specific time delay from each of the previously derived pulses equivalent to half of the nominal time between the previously derived pulses based on the nominal wheel speed.

7. A wheel balancer as claimed in any one of the preceding claims in which the or each position transducer is constituted by a reflective mark applied to the wheel and a light source and photo-detector arranged so that the photo-detector responds to the passage of the mark past the detector during rotation of the wheel and thereby provides the datum position signal.

8. A method of balancing a pair of driven wheels of a vehicle including the steps of:
raising said wheels off the ground on supports arranged adjacent to the wheels and incorporating force transducers arranged to sense cyclic variations in the loads on the supports and thereby produce cyclically variable load signals during rotation of the wheels, applying a mark to each of said wheels and arranging a detector in relation to each wheel to respond to the passage of the mark past the detector during rotation of the wheel and thereby produce a datum position signal, rotating the wheels at a pre-selected speed from the engine of the vehicle under the control of an operator at the driving controls of the vehicle, deriving a weight signal proportional to the maximum value of each load signal, deriving the phase relationship between each weight signal and its associated datum position signal to provide an angle signal indicative of the position of the out of balance force in relation to the datum position, displaying weight and angle signals indicative of requirements for balancing the wheels to the operator whilst at the vehicle controls, bringing the wheels to rest, and applying balance weights of the indicated value to the wheels at the indicated angles with respect to the datum position.

FIG.1.

FIG. 2.

2/3

0007741

1 2 3 4 5 6 7 8 1 2 3 4 5 6 7 8

$F1 = f$

$F2 = \dfrac{df}{dt}$

$F3 = \left(f + \dfrac{df}{dt}\right)$

$F4 = \dfrac{d}{dt}\left(f + \dfrac{df}{dt}\right)$

FA

FB

FC

FD

FA+FB+FC+FD

F5

FIG. 3

# EUROPEAN SEARCH REPORT

European Patent Office

Application number

EP 79 30 1354

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| D,X | GB - A - 1 129 477 (H.R. TEBBOTH) <br> * Page 2, lines 47-130; page 3, lines 1-48; figure: * <br><br> -- <br><br> US - A - 3 483 756 (M.S. MERRILL) <br> Column 5, line 31 - column 6, line 33; figures 1,6,8 * <br><br> -- | 1,3-5 7,8 <br><br><br><br> 2 | G 01 M 1/28 |
| X | DE - A - 1 698 111 (AUTOMATION GmbH & CO.) <br> * Page 3, last paragraph; page 4, first paragraph; figures 1-3 * <br><br> -- <br><br> US - A - 3 910 121 (D.B. CURCHOD et al.) <br> * Column 4, lines 8-67; figure 8 * <br><br> -- <br><br> US - A - 3 678 761 (B.J. BLACK- BURN) <br> * Abstract; column 3, lines 53-75; column 4, lines 1-20; figures 1-3,8 * <br><br> ---- | 1,3-5 7,8 <br><br><br><br><br> 1,3 <br><br><br><br><br> 1,7,8 | TECHNICAL FIELDS SEARCHED (Int.Cl. ³) <br><br> G 01 M 1/08 <br> 1/22 <br> 1/28 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 23-10-1979 | VAN ASSCHE |

EPO Form 1503.1 06.78